# EUROPÄISCHE PATENTSCHRIFT

(11) **EP 3 771 377 B1**
(45) Veröffentlichungstag und Bekanntmachung des Hinweises auf die Patenterteilung: **01.11.2023**
(21) Anmeldenummer: 20183504.8
(22) Anmeldetag: 01.07.2020
(51) Int. Cl.: A47J 43/07

(54) **HAUSGERÄT MIT EINEM AUTOMATISCH EINSTELLBAREN MOTOR UND VERFAHREN ZUM BETRIEB EINES HAUSGERÄTS**
DOMESTIC APPLIANCE WITH AN AUTOMATICALLY ADJUSTABLE MOTOR AND METHOD FOR OPERATING A DOMESTIC APPLIANCE
APPAREIL ÉLECTROMÉNAGER DOTÉ D'UN MOTEUR À RÉGLAGE AUTOMATIQUE ET PROCÉDÉ DE FONCTIONNEMENT D'UN APPAREIL ÉLECTROMÉNAGER

(30) Priorität: 30.07.2019 DE 102019211293
(43) Veröffentlichungstag der Anmeldung: 03.02.2021
(73) Patentinhaber: BSH Hausgeräte GmbH, 81739 München (DE)
(72) Erfinder: Mrak, Peter, 2382 Mislinja (SI); Berzelak, Matej, 3334 Luce (SI); Brinovsek, Luka, 3341 Smartno ob Dreti (SI); Lotric, Matjaz, 4228 Zelezniki (SI); Zdolsek, Peter, 3000 Celje (SI)

(56) Entgegenhaltungen:
- EP-A1- 3 329 816
- EP-A1- 3 482 662
- WO-A1-2018/085369
- GB-A- 2 518 422
- US-A1- 2019 001 288

## Beschreibung

Die Erfindung betrifft ein Hausgerät, insbesondere eine Küchenmaschine, die einen einstellbaren Antriebsmotor aufweist. Des Weiteren betrifft die Erfindung ein Verfahren zum Betrieb eines Hausgeräts.

Ein Hausgerät, insbesondere eine Küchenmaschine, kann einen Motor zum Antrieb von ein oder mehreren Komponenten des Hausgeräts aufweisen. Insbesondere kann eine Küchenmaschine einen Motor aufweisen, mit dem ein oder mehrere austauschbare Werkzeuge in einem Behälter der Küchenmaschine angetrieben werden können. Der Betrieb des Motors des Hausgeräts kann bei bestimmten Betriebssituationen des Hausgeräts zu kritischen Bewegungen, insbesondere Schwingungen, des Hausgeräts führen. GB 2 518 422 A beschreibt ein tragbares Küchengerät mit einem Bewegungssensor.

Das vorliegende Dokument befasst sich mit der technischen Aufgabe, die Zuverlässigkeit und/oder die Sicherheit eines durch einen Motor angetriebenen Hausgeräts, insbesondere einer Küchenmaschine, zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Hausgerät beschrieben, das einen (elektrischen) Motor umfasst, der eingerichtet ist, eine Komponente des Hausgeräts anzutreiben. Insbesondere kann das Hausgerät ausgebildet ist, mit jeweils einer Komponente aus einer Mehrzahl von unterschiedlichen austauschbaren Komponenten, die jeweils durch den Motor angetrieben werden, betrieben zu werden. Das Hausgerät kann eine Küchenmaschine mit einem Behälter zur Aufnahme von Nahrungsmitteln sein. In diesem Fall, kann die von dem Motor angetriebene Komponente ein in dem Behälter angeordnetes und/oder einsetzbares Werkzeug zur Verarbeitung eines Nahrungsmittels (z.B. ein Messer, ein Besen, ein Knethaken, etc.) sein.

Das Hausgerät umfasst ferner ein Gyroskop, das eingerichtet ist, Drehbewegungsdaten in Bezug auf eine Drehbewegung des Gyroskops und/oder des Hausgeräts zu erfassen. Dabei ist das Gyroskop typischerweise fest in dem Hausgerät (z.B. auf einer Leiterplatte des Hausgeräts) verbaut. Das Gyroskop kann als Mikrochip implementiert sein. Dabei kann MEMS (microelectromechanical systems) Technology verwendet werden. Die Drehbewegungsdaten können die Drehbewegung, insbesondere die Drehrate oder die Drehgeschwindigkeit oder die Winkelgeschwindigkeit, des Gyroskops und/oder des Hausgeräts um ein oder mehrere unterschiedliche Drehachsen (insbesondere um die Längsachse, um die Querachse und/oder um die Hochachse des Hausgeräts) anzeigen.

Des Weiteren umfasst das Hausgerät eine Steuereinheit, die eingerichtet ist, den Motor in Abhängigkeit von den Drehbewegungsdaten zu betreiben. Insbesondere kann die Steuereinheit eingerichtet sein, die Geschwindigkeit des Motors in Abhängigkeit von den Drehbewegungsdaten anzupassen. Dabei kann die Anpassung der Geschwindigkeit des Motors derart erfolgen, dass das durch die Drehbewegungsdaten angezeigte Ausmaß von Bewegungen des Hausgeräts kleiner als ein vordefinierter Bewegungs-Schwellenwert ist.

Die Berücksichtigung von Drehbewegungsdaten (die von einem Gyroskop erfasst werden) beim Betrieb eines elektrischen Motors eines Hausgeräts ermöglicht es in besonders effizienter und präziser Weise, die Sicherheit und die Zuverlässigkeit des Hausgeräts zu erhöhen. Des Weiteren kann die mechanische Belastung des Hausgeräts reduziert werden. Ferner kann durch die automatische Anpassung des Betriebs des Motors die Qualität von in dem Hausgerät verarbeiteten Nahrungsmitteln erhöht werden.

Die Steuereinheit kann eingerichtet sein, auf Basis der Drehbewegungsdaten den Wert eines Streuungsmaßes der Drehbewegung des Gyroskops und/oder des Hausgeräts innerhalb eines Zeitintervalls zu ermitteln. Die Drehbewegungsdaten können für das Zeitintervall eine Sequenz von Drehbewegungs-Messwerten für eine entsprechende Sequenz von Abtastzeitpunkten anzeigen (z.B. zwischen 50 und 150 Messwerte). Die Abtastzeitpunkte können z.B. zwischen 10ms und 100ms voneinander beabstandet sein.

Die einzelnen Drehbewegungs-Messwerte können z.B. einen Messwert der Drehrate und/oder der Winkelgeschwindigkeit um zumindest eine Drehachse anzeigen. Der Wert des Streuungsmaßes kann dann in präziser Weise auf Basis der Sequenz von Drehbewegungs-Messwerten ermittelt werden.

Insbesondere kann die Steuereinheit eingerichtet sein, zur Ermittlung des Wertes des Streuungsmaßes für das Zeitintervall einen Mittelwert der Drehbewegungs-Messwerte der Sequenz von Drehbewegungs-Messwerten für das Zeitintervall zu ermitteln. Ferner kann eine mittlere absolute und/oder quadratische Abweichung der Sequenz von Drehbewegungs-Messwerten von dem Mittelwert ermittelt werden. Die mittlere absolute und/oder quadratische Abweichung kann dann als Wert des Streuungsmaßes verwendet werden. Insbesondere kann das Streuungsmaß die Varianz der Sequenz von Drehbewegungs-Messwerten anzeigen.

Die Steuereinheit kann eingerichtet sein, den Motor in Abhängigkeit von dem ermittelten Wert des Streuungsmaßes zu betreiben. Insbesondere können die Geschwindigkeit und/oder ein Bewegungsmuster des Motors in Abhängigkeit von dem ermittelten Wert des Streuungsmaßes angepasst werden. Durch die Ermittlung und Berücksichtigung eines Wertes des Streuungsmaßes der Drehbewegung des Hausgeräts und/oder des Gyrosensors um ein oder mehrere unterschiedliche Drehachsen kann der Betrieb des Motors in besonders zuverlässiger und sicherer Weise angepasst werden.

Insbesondere kann die Steuereinheit eingerichtet sein, wiederholt und/oder periodisch (z.B. mit einer Frequenz von 1Hz oder mehr, von 10Hz oder mehr oder von 100Hz oder mehr), einen jeweils aktuellen Wert des Streuungsmaßes der Drehbewegung des Gyroskops und/oder des Hausgeräts zu ermitteln. Zu diesem Zweck kann ein gleitendes Zeitfenster bzw. Zeitintervall verwendet werden, um jeweils eine Sequenz von Drehbewegungs-Messwerten zur Ermittlung eines aktuellen Werts des Streuungsmaßes bereitzustellen.

Der Motor des Hausgeräts kann dann wiederholt und/oder periodisch in Abhängigkeit von dem jeweils aktuellen Wert des Streuungsmaßes betrieben werden. Insbesondere können die Geschwindigkeit und/oder das Bewegungsmuster des Motors wiederholt und/oder periodisch in Abhängigkeit von dem jeweils aktuellen Wert des Streuungsmaßes angepasst werden. So kann ein besonders sicherer und zuverlässiger Betrieb des Hausgeräts ermöglicht werden.

Die Steuereinheit kann eingerichtet sein, automatisch die Geschwindigkeit des Motors zu erhöhen, wenn der aktuelle Wert des Streuungsmaßes niedriger als ein vorhergehender Wert des Streuungsmaßes ist. Alternativ oder ergänzend kann die Steuereinheit eingerichtet sein, die Geschwindigkeit des Motors zu reduzieren, wenn der aktuelle Wert des Streuungsmaßes höher als der vorhergehende Wert des Streuungsmaßes ist. So kann in zuverlässiger Weise bewirkt werden, dass das Ausmaß der Bewegungen des Hausgeräts unter einem Bewegungs-Schwellenwert bleibt.

Die Drehbewegungsdaten können die Drehbewegung des Gyroskops und/oder des Hausgeräts um mehrere unterschiedliche Drehachsen anzeigen. Die Steuereinheit kann eingerichtet sein, auf Basis der Drehbewegungsdaten die Drehbewegung des Gyroskops und/oder des Hausgeräts um die unterschiedlichen Drehachsen auszuwerten, um den Motor des Hausgeräts zu betreiben. Insbesondere können für mehrere unterschiedliche Drehachsen jeweils Werte des Streuungsmaßes ermittelt werden. Der Motor kann dann in besonders präziser Weise auf Basis der Werte des Streuungsmaßes für die unterschiedlichen Drehachsen betrieben werden.

Wie bereits oben dargelegt, kann das Hausgerät ausgebildet sein, mit jeweils einer Komponente aus einer Mehrzahl von unterschiedlichen austauschbaren Komponenten betrieben zu werden. Die Steuereinheit kann eingerichtet sein, auf Basis der Drehbewegungsdaten die Komponente aus der Mehrzahl von unterschiedlichen austauschbaren Komponenten zu bestimmen, mit der das Hausgerät betrieben wird. Mit anderen Worten, es kann automatisch (ggf. allein) auf Basis der Drehbewegungsdaten ermittelt werden, mit welcher Komponente ein Hausgerät, insbesondere eine Küchenmaschine, betrieben wird.

Zu diesem Zweck kann die Steuereinheit eingerichtet sein, auf Basis der Drehbewegungsdaten Merkmalswerte für ein oder mehrere Merkmale zu ermitteln. Dabei können die ein oder mehreren Merkmale die durch die Drehbewegungsdaten angezeigte Drehbewegung des Gyroskops und/oder des Hausgeräts (in kompakter Weise) beschreiben. Es kann dann anhand eines maschinen-erlernten Klassifikators und in Abhängigkeit von den ermittelten Merkmalswerten für die ein oder mehrere Merkmale die Komponente aus der Mehrzahl von unterschiedlichen austauschbaren Komponenten ermittelt werden, mit der das Hausgerät (aktuell) betrieben wird. Dabei kann der Klassifikator ausgebildet sein, den mehrdimensionalen Raum von möglichen Merkmalswerten für die ein oder mehrere Merkmale in eine Mehrzahl von Teilräumen für die entsprechende Mehrzahl von unterschiedlichen austauschbaren Komponenten zu unterteilen. Der Klassifikator kann z.B. ein angelerntes neuronales Netz umfassen.

Des Weiteren kann die Steuereinheit eingerichtet sein, den Motor in Abhängigkeit von der ermittelten Komponente zu betreiben. Dabei können insbesondere die Drehgeschwindigkeit und/oder das Bewegungsmuster (z.B. eine kontinuierliche Bewegung oder eine unterbrochene Bewegung) des Motors in Abhängigkeit von der ermittelten Komponente angepasst werden. So können die Zuverlässigkeit und die Sicherheit des Hausgeräts weiter erhöht werden. Des Weiteren kann so die Qualität eines in dem Hausgerät verarbeiteten Nahrungsmittels erhöht werden.

Die Steuereinheit kann eingerichtet sein, ein Bewegungsmuster des Motors in Abhängigkeit von den Drehbewegungsdaten, insbesondere in Abhängigkeit von einem Wert des Streuungsmaßes, anzupassen. Dabei kann das Bewegungsmuster des Motors ein oder mehrere Stopp-Zeitintervalle umfassen, in denen der Betrieb des Motors unterbrochen wird, sowie ein oder mehrere Betriebs-Zeitintervalle umfassen, in denen der Motor betrieben wird. Dabei kann abwechselnd ein Betriebs-Zeitintervall auf ein Stopp-Zeitintervall folgen, und umgekehrt.

Die Dauer der ein oder mehrere Stopp-Zeitintervalle und/oder der ein oder mehreren Betriebs-Zeitintervalle, und/oder die Geschwindigkeit des Motors während der ein oder mehreren Betriebs-Zeitintervalle können in Abhängigkeit von den Drehbewegungsdaten, insbesondere in Abhängigkeit von einem Wert des Streuungsmaßes, angepasst werden. So kann ein besonders zuverlässiger und sicherer Betrieb eines Hausgeräts ermöglicht werden.

Gemäß einem weiteren Aspekt der Erfindung wird ein Verfahren zum Betrieb eines Hausgeräts nach dem Anspruch 13 beschrieben.

Im Weiteren wird die Erfindung anhand von in der beigefügten Zeichnung dargestellten Ausführungsbeispielen näher beschrieben. Dabei zeigen
- Figur 1a: ein Blockdiagramm einer Küchenmaschine als Beispiel für ein Hausgerät;
- Figur 1b: eine Küchenmaschine in einer perspektivischen Ansicht;
- Figur 2: einen beispielhaften Gyrosensor;
- Figur 3: ein Ablaufdiagramm eines beispielhaften Verfahrens zum Betrieb eines Motors eines Hausgeräts; und
- Figuren 4a und 4b: beispielhafte Varianzdaten in Bezug auf die Varianz der Drehbewegung eines Hausgeräts und eine beispielhafte Geschwindigkeit eines Motors des Hausgeräts.

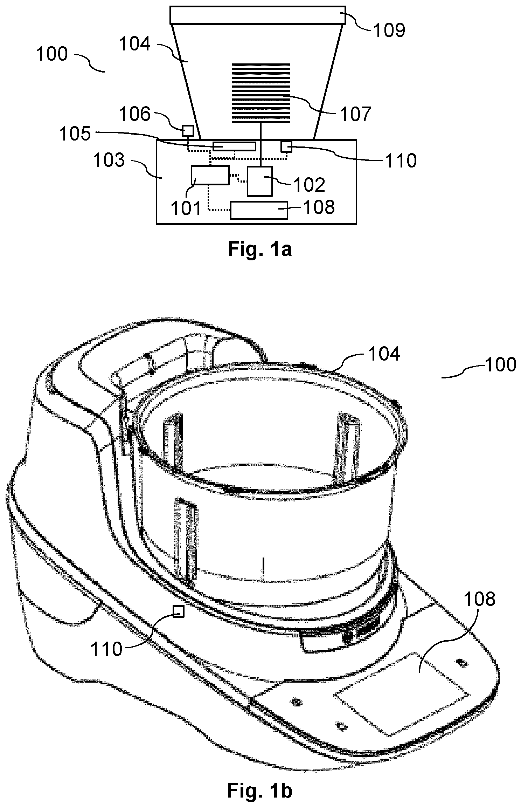

Wie eingangs dargelegt, befasst sich das vorliegende Dokument damit, die Zuverlässigkeit und die Sicherheit des Betriebs eines Motors eines Hausgeräts zu erhöhen. In diesem Zusammenhang zeigt Fig. 1a eine beispielhafte Küchenmaschine 100 (als Beispiel für ein Hausgerät). Die in Fig. 1a dargestellte Küchenmaschine 100 umfasst einen Behälter 104, der auf einer Basis 103 der Küchenmaschine 100 angeordnet sein kann und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen.

Des Weiteren kann die Küchenmaschine 100 ein oder mehrere Sensoren 106 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor 106 ist ein Temperatursensor, der eingerichtet ist, Temperaturdaten in Bezug auf die Temperatur des Behälters 104 und/oder des darin enthaltenen Nahrungsmittels zu erfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 weist einen Deckel 109 zum Abdecken des Behälters 104 auf. Dabei kann der Deckel 109 ggf. mittels einer Riegelvorrichtung (nicht dargestellt) verriegelt werden, um den Zugang zu dem Behälter 104 zu unterbinden. Beispielsweise kann die Steuereinheit 101 bestimmen, dass innerhalb des Behälters 104 ein Verarbeitungsschritt durchgeführt wird (z.B. das Scheiden eines Nahrungsmittels), bei dem der Deckel 109 des Behälters 104 verriegelt sein sollte. Die Steuereinheit 101 kann daraufhin die Riegelvorrichtung veranlassen, den Deckel 109 zu verriegeln. Des Weiteren kann die Steuereinheit 101 eingerichtet sein, die Riegelvorrichtung zu veranlassen, nach Beendigung des Verarbeitungsschrittes den Deckel 109 wieder zu entriegeln.

Fig. 1b zeigt eine beispielhafte Küchenmaschine 100 in einer perspektivischen Ansicht.

Die Küchenmaschine 100 umfasst ein Gyroskop bzw. einen Gyroskop-Sensor 110. Das Gyroskop 110 ist an der Basis und/oder in der Nähe des Behälters 104 der Küchenmaschine 100 angeordnet, und bevorzugt fest mit der Küchenmaschine 100 verbunden. Das Gyroskop 110 kann in effizienter Weise als Mikrochip mittels MEMS (microelectromechanical system) Technologie implementiert sein. Das Gyroskop 110 ist eingerichtet, Drehbewegungsdaten (d.h. Sensordaten) in Bezug auf eine Drehbewegung des Gyroskops 110 (und damit der Küchenmaschiene100) um ein oder mehrere Drehachsen zu erfassen.

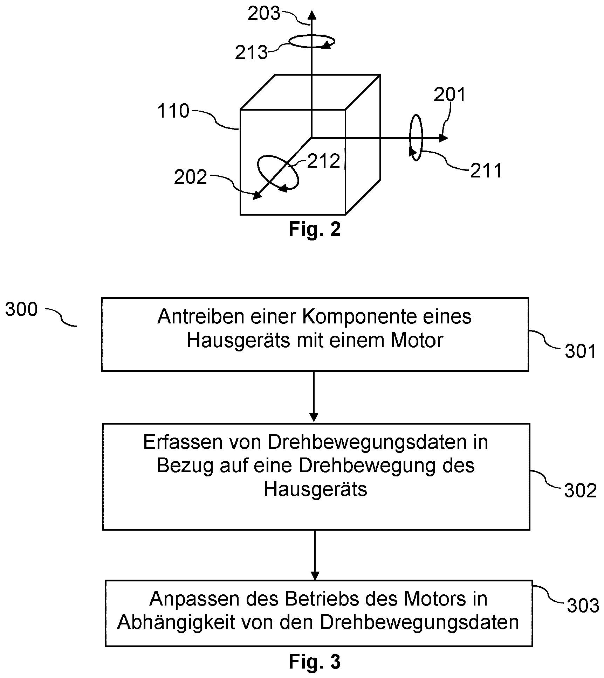

Fig. 2 zeigt ein beispielhaftes Gyroskop 110 und die drei kartesischen Achsen 201, 202, 203. Dabei kann das Gyroskop 110 derart in der Küchenmaschine 100 verbaut sein, dass
- die erste Achse 201 der Längsachse durch die Küchenmaschine 100 (von der hinteren Seite bis zu der vorderen Seite der Küchenmaschine 100) entspricht; die erste Achse 201 kann auch als Rollachse bezeichnet werden;
- die zweite Achse 202 der Querachse durch die Küchenmaschine 100 (von der linken Seite bis zu der rechten Seite der Küchenmaschine 100) entspricht; die zweite Achse 202 kann auch als Nickachse bezeichnet werden; und/oder
- die dritte Achse 203 der Hochachse durch die Küchenmaschine 100 (von der unteren Seite bis zu der oberen Seite der Küchenmaschine 100) entspricht; die dritte Achse 203 kann auch als Gierachse bezeichnet werden.

Das Gyroskop 110 kann eingerichtet sein, Drehbewegungsdaten in Bezug auf eine erste Drehbewegung (z.B. eine Rollbewegung) 211 um die erste Achse 201, in Bezug auf eine zweite Drehbewegung (z.B. eine Nickbewegung) 212 um die zweite Achse 202, und/oder in Bezug auf eine dritte Drehbewegung (z.B. eine Gierbewegung) 213 um die dritte Achse 203 bereitzustellen. Insbesondere können die Drehbewegungsdaten Messwerte der Drehgeschwindigkeit um die jeweilige Achse 201, 202, 203 anzeigen.

Die Steuereinheit 101 der Küchenmaschine 100 kann eingerichtet sein, den Motor 102 in Abhängigkeit von den Drehbewegungsdaten zu betreiben. Insbesondere kann die Rotationsgeschwindigkeit des Motors 102 in Abhängigkeit von den Drehbewegungsdaten angepasst werden, beispielsweise um ein Ausmaß (z.B. eine Amplitude) der Bewegungen der Küchenmaschine 100 zu begrenzen. So können die Zuverlässigkeit und die Sicherheit der Küchenmaschine 100 erhöht werden.

Insbesondere kann die Steuereinheit 101 eingerichtet sein, Drehbewegungsdaten zu ermitteln, die eine Sequenz von Drehbewegungs-Messwerten für eine entsprechende Sequenz von Zeitpunkten anzeigen. Beispielsweise kann an einer Sequenz von aufeinanderfolgenden Abtastzeitpunkten jeweils ein Messwert in Bezug auf die Drehbewegung 211, 212, 213 um zumindest eine Achse 201, 202, 203 erfasst werden. Der Messwert kann z.B. die Drehgeschwindigkeit der Drehbewegung 211, 212, 213 um ein oder mehrere Achsen 201, 202, 203 anzeigen. Für die Sequenz von Drehbewegungs-Messwerten kann ein Mittelwert der Drehbewegungs-Messwerte ermittelt werden. Des Weiteren kann eine mittlere (absolute und/oder quadratische) Abweichung der Drehbewegungs-Messwerte von dem ermittelten Mittelwert der Drehbewegungs-Messwerte ermittelt werden. Insbesondere kann eine Varianz der Sequenz von Drehbewegungs-Messwerten ermittelt werden.

Es kann somit für ein bestimmtes Zeitintervall (d.h. für eine Sequenz von Zeitpunkten) ein Streuungsmaß der Drehbewegung 211, 212, 213 der Küchenmaschine 100 in dem bestimmten Zeitintervall ermittelt werden. Das Zeitintervall kann fließend verschoben werden, so dass während des Betriebs der Küchenmaschine 100 ein zeitlicher Verlauf des Streuungsmaßes ermittelt werden. Dabei zeigt ein hoher Wert des Streuungsmaßes an, dass die Drehbewegung 211, 212, 213 der Küchenmaschine 100 um ein oder mehrere Achsen 201, 202, 203 relativ stark variiert, und somit eine relativ hohe mechanische Belastung der Küchenmaschine 100 vorliegt. Andererseits zeigt ein relativ niedriger Wert des Streuungsmaßes an, dass die Drehbewegung 211, 212, 213 der Küchenmaschine 100 um ein oder mehrere Achsen 201, 202, 203 relativ wenig variiert, und somit eine relativ niedrige mechanische Belastung der Küchenmaschine 100 vorliegt.

Die Steuereinheit 101 kann eingerichtet sein, die Geschwindigkeit des Motors 102 der Küchenmaschine 100 in Abhängigkeit von dem ermittelten Wert des Streuungsmaßes (insbesondere der Varianz) der Drehbewegung 211, 212, 213 der Küchenmaschine 100 anzupassen. Insbesondere kann die Geschwindigkeit des Motors 102 automatisch reduziert werden, wenn der Wert des Streuungsmaßes ansteigt. Andererseits kann die Geschwindigkeit des Motors 102 automatisch erhöht werden, wenn der Wert des Streuungsmaßes sinkt.

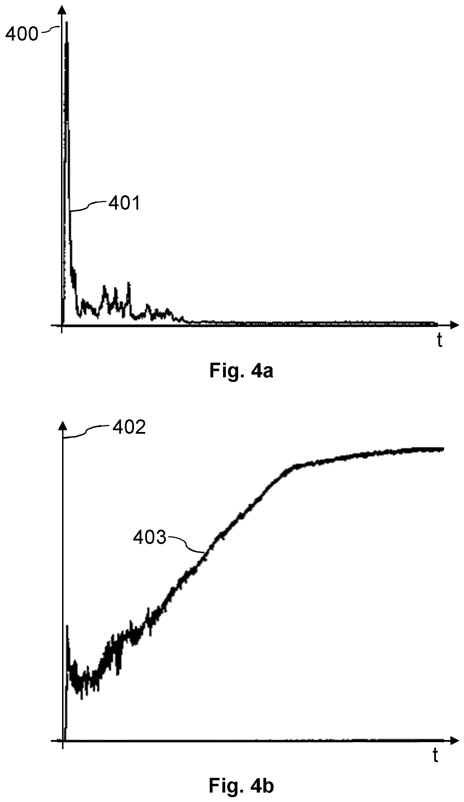

Fig. 4a zeigt einen beispielhaften zeitlichen Verlauf 401 des Streuungsmaßes 400 (z.B. beim Reiben von Parmesan-Käse). Der Wert des Streuungsmaßes 400 sinkt mit der Zeit t (da der Parmesan-Käse im Laufe des Reib-Prozesses weicher wird). Die Steuereinheit 101 ist eingerichtet, die Geschwindigkeit des Motors 102 in Abhängigkeit von dem zeitlichen Verlauf 401 des Streuungsmaßes 400 anzupassen. Insbesondere kann, wie in Fig. 4b dargestellt, die Geschwindigkeit 402 des Motors 102 mit der Zeit erhöht werden (dargestellt durch den zeitlichen Verlauf 403), da der Wert des Streuungsmaßes 400 mit der Zeit sinkt. Durch die automatische Erhöhung der Geschwindigkeit 402 des Motors 102 kann somit die Effizienz der Küchenmaschine 100 erhöht werden (da der Parmesan schneller gerieben werden kann).

Die Steuereinheit 101 kann somit eingerichtet sein, während des Betriebs der Küchenmaschine 100 wiederholt und/oder periodisch (z.B. mit einer Frequenz von 1Hz, 10Hz, 100Hz oder mehr) einen aktualisierten Wert des Streuungsmaßes 400 zu ermitteln. Des Weiteren kann wiederholt und/oder periodisch die Geschwindigkeit 402 des Motors 102 in Abhängigkeit von dem Streuungsmaß 400 angepasst werden.

Die Steuereinheit 101 kann eingerichtet sein, auf Basis der Drehbewegungsdaten das Werkzeug 107 bzw. den Typ des Werkzeugs 107 zu bestimmen, mit dem die Küchenmaschine 100 betrieben wird. Beispielhafte Werkzeuge 107 sind: ein Messer, ein Schneebesen, ein Rührwerkzeug, ein Reibwerkzeug, ein Knethaken, etc. Durch Auswertung der Drehbewegungsdaten kann bestimmt werden, mit welchem der unterschiedlichen Werkzeuge 107 die Küchenmaschine 100 betrieben wird.

Beispielsweise kann die Steuereinheit 101 auf einen (maschinen-erlernten) Klassifikator zurückgreifen, der eingerichtet ist, das jeweils verwendete Werkzeug 107 auf Basis von aktuell erfassten Drehbewegungsdaten zu ermitteln. Zu diesem Zweck können auf Basis der Drehbewegungsdaten Merkmalswerte für ein oder mehrere Merkmale ermittelt werden. Beispielhafte Merkmale sind
- ein Mittelwert der Drehrate um ein oder mehrere Drehachsen 201, 202, 203 (z.B. für ein oder mehrere Geschwindigkeiten 402 des Motors 102); und/oder
- ein Wert des Streuungsmaßes 400 für eine Drehbewegung 211, 212, 213 um ein oder mehrere Drehachsen 201, 202, 203 (z.B. für ein oder mehrere Geschwindigkeiten 402 des Motors 102).

Es kann dann in präziser und zuverlässiger Weise anhand des Klassifikators das Werkzeug 107 ermittelt werden, mit dem die Küchenmaschine 100 betrieben wird.

Die Steuereinheit 101 kann ferner eingerichtet sein, den Motor 102 automatisch in Abhängigkeit von dem eingesetzten Werkzeug 107 zu betreiben. So kann die Qualität der Bearbeitung von Nahrungsmitteln erhöht werden.

Wie bereits oben dargelegt, kann das Gyroskop 110 ausgebildet sein, Drehbewegungsdaten für mehrere Drehachsen 201, 202, 203 bereitzustellen. Für jede der Drehachsen 201, 202, 203 kann ein Wert des Streuungsmaßes 400 ermittelt werden. Der Motor 102 kann dann in Abhängigkeit von den Werten des Streuungsmaßes 400 für mehrere Drehachsen 201, 202, 203 betrieben werden. So können die Zuverlässigkeit und die Sicherheit des Betriebs einer Küchenmaschine 100 weiter erhöht werden.

Fig. 3 zeigt ein Ablaufdiagramm eines beispielhaften Verfahrens 300 zum Betrieb eines Hausgeräts 100, insbesondere einer Küchenmaschine. Das Verfahren 300 kann durch eine Steuereinheit 101 des Hausgeräts 100 ausgeführt werden. Das Verfahren 300 umfasst das Antreiben 301 einer Komponente 107 des Hausgeräts 100 mittels eines (elektrischen) Motors 102 des Hausgeräts 100. Des Weiteren umfasst das Verfahren 300 das Erfassen 302, mittels eines Gyroskops 110 des Hausgeräts 100, von Drehbewegungsdaten in Bezug auf eine Drehbewegung 211, 212, 213 des Gyroskops 110 und/oder des Hausgeräts 100. Das Gyroskop 110 ist dabei typischerweise fest in dem Hausgerät 100 verbaut, so dass eine Drehbewegung 211, 212, 213 des Gyroskops 110 einer Drehbewegung 211, 212, 213 des Hausgeräts 100 entspricht.

Das Verfahren 300 umfasst ferner das Anpassen 303 des Betriebs des Motors 102 zum Antrieb der Komponente 107 in Abhängigkeit von den Drehbewegungsdaten. Insbesondere kann die Winkelgeschwindigkeit des Motors 102 in Abhängigkeit von den Drehbewegungsdaten angepasst, insbesondere erhöht oder reduziert, werden. Insbesondere kann auf Basis der Drehbewegungsdaten ein zeitlicher Verlauf 401 eines Streuungsmaßes 400 der Drehbewegung 211, 212, 213 ermittelt werden. Der Betrieb des Motors 102 kann dann in präziser Weise in Abhängigkeit von dem zeitlichen Verlauf 401 des Streuungsmaßes 400 angepasst werden.

Durch die in diesem Dokument beschriebenen Maßnahmen kann ein sicherer und zuverlässiger Betrieb eines Hausgeräts 100 ermöglicht werden. Insbesondere können die mechanische Belastung eines Hausgeräts 100 und/oder des von einem Hausgerät 100 verarbeiteten Nahrungsmittels reduziert werden. Dabei eignen sich die Drehbewegungsdaten in besonders vorteilhafter Weise, um automatisch den Betrieb des Motors 102 des Hausgeräts 100 an eine aktuell vorliegende Betriebssituation anzupassen.

## Patentansprüche

1. Hausgerät (100), das umfasst,
- einen Motor (102), der eingerichtet ist, eine Komponente (107) des Hausgeräts (100) anzutreiben;
- ein Gyroskop (110), das eingerichtet ist, Drehbewegungsdaten in Bezug auf eine Drehbewegung (211, 212, 213) des Gyroskops (110) und/oder des Hausgeräts (100) zu erfassen; und
- eine Steuereinheit (101), **dadurch gekennzeichnet, dass** die Steuereinheit (101) eingerichtet ist,
- auf Basis der Drehbewegungsdaten einen Wert eines Streuungsmaßes (400) der Drehbewegung (211, 212, 213) des Gyroskops (110) und/oder des Hausgeräts (100) innerhalb eines Zeitintervalls zu ermitteln; und
- den Motor (102) in Abhängigkeit von dem ermittelten Wert des Streuungsmaßes (400) zu betreiben.

2. Hausgerät (100) gemäß Anspruch 1, wobei die Steuereinheit (101) eingerichtet ist, eine Geschwindigkeit (402) des Motors (102) in Abhängigkeit von dem ermittelten Wert des Streuungsmaßes (400) anzupassen.

3. Hausgerät (100) gemäß einem der vorhergehenden Ansprüche, wobei die Steuereinheit (101) eingerichtet ist, wiederholt und/oder periodisch,
- einen jeweils aktuellen Wert des Streuungsmaßes (400) der Drehbewegung (211, 212, 213) des Gyroskops (110) und/oder des Hausgeräts (100) zu ermitteln; und
- den Motor (102) in Abhängigkeit von dem jeweils aktuellen Wert des Streuungsmaßes (400) zu betreiben.

4. Hausgerät (100) gemäß einem der vorhergehenden Ansprüche, wobei
- die Drehbewegungsdaten für das Zeitintervall eine Sequenz von Drehbewegungs-Messwerten für eine entsprechende Sequenz von Abtastzeitpunkten anzeigen; und
- die Steuereinheit (101) eingerichtet ist, den Wert des Streuungsmaßes (400) auf Basis der Sequenz von Drehbewegungs-Messwerten zu ermitteln.

5. Hausgerät (100) gemäß Anspruch 4, wobei die Steuereinheit (101) eingerichtet ist, zur Ermittlung des Wertes des Streuungsmaßes (400) für das Zeitintervall
- einen Mittelwert der Drehbewegungs-Messwerte der Sequenz von Drehbewegungs-Messwerten für das Zeitintervall zu ermitteln; und
- eine mittlere absolute und/oder quadratische Abweichung der Sequenz von Drehbewegungs-Messwerten von dem Mittelwert zu ermitteln, insbesondere als Wert des Streuungsmaßes (400).

6. Hausgerät (100) gemäß einem der vorhergehenden Ansprüche, wobei die Steuereinheit (101) eingerichtet ist, automatisch,
- eine Geschwindigkeit (402) des Motors (102) zu erhöhen, wenn der aktuelle Wert des Streuungsmaßes (400) niedriger als ein vorhergehender Wert des Streuungsmaßes (400) ist; und/oder
- die Geschwindigkeit (402) des Motors (102) zu reduzieren, wenn der aktuelle Wert des Streuungsmaßes (400) höher als der vorhergehende Wert des Streuungsmaßes (400) ist.

7. Hausgerät (100) gemäß einem der vorhergehenden Ansprüche, wobei die Drehbewegungsdaten die Drehbewegung (211, 212, 213), insbesondere eine Drehrate oder eine Drehgeschwindigkeit oder eine Winkelgeschwindigkeit, des Gyroskops (110) und/oder des Hausgeräts (100) um ein oder mehrere unterschiedliche Drehachsen (201, 202, 203) anzeigen.

8. Hausgerät (100) gemäß einem der vorhergehenden Ansprüche, wobei
- die Drehbewegungsdaten die Drehbewegung (211, 212, 213) des Gyroskops (110) und/oder des Hausgeräts (100) um mehrere unterschiedliche Drehachsen (201, 202, 203), insbesondere um eine Längsachse (201), um eine Querachse (202) und/oder um eine Hochachse (203) des Hausgeräts (100), anzeigen; und
- die Steuereinheit (101) eingerichtet ist, auf Basis der Drehbewegungsdaten die Drehbewegung (211, 212, 213) des Gyroskops (110) und/oder des Hausgeräts (100) um die unterschiedlichen Drehachsen (201, 202, 203) auszuwerten, um den Motor (102) des Hausgeräts (100) zu betreiben.

9. Hausgerät (100) gemäß einem der vorhergehenden Ansprüche, wobei
- das Hausgerät (100) ausgebildet ist, mit jeweils einer Komponente (107) aus einer Mehrzahl von unterschiedlichen austauschbaren Komponenten (107), die jeweils durch den Motor (102) angetrieben werden, betrieben zu werden; und
- die Steuereinheit (101) eingerichtet ist,
- auf Basis der Drehbewegungsdaten die Komponente (107) aus der Mehrzahl von unterschiedlichen austauschbaren Komponenten (107) zu bestimmen, mit der das Hausgerät (100) betrieben wird; und
- den Motor (102) in Abhängigkeit von der ermittelten Komponente (107) zu betreiben.

10. Hausgerät (100) gemäß Anspruch 9, wobei die Steuereinheit (101) eingerichtet ist, eine Drehgeschwindigkeit (402) und/oder ein Bewegungsmuster des Motors (102) in Abhängigkeit von der ermittelten Komponente (107) anzupassen.

11. Hausgerät (100) gemäß einem der Ansprüche 9 bis 10, wobei die Steuereinheit (101) eingerichtet ist,
- auf Basis der Drehbewegungsdaten Merkmalswerte für ein oder mehrere Merkmale zu ermitteln; wobei die ein oder mehreren Merkmale die durch die Drehbewegungsdaten angezeigte Drehbewegung (211, 212, 213) des Gyroskops (110) und/oder des Hausgeräts (100) beschreiben; und
- anhand eines maschinen-erlernten Klassifikators und in Abhängigkeit von den ermittelten Merkmalswerten für die ein oder mehrere Merkmale die Komponente (107) aus der Mehrzahl von unterschiedlichen austauschbaren Komponenten (107) zu bestimmen, mit der das Hausgerät (100) betrieben wird; wobei der Klassifikator eingerichtet ist, einen mehrdimensionalen Raum von möglichen Merkmalswerten für die ein oder mehrere Merkmale in eine Mehrzahl von Teilräumen für die entsprechende Mehrzahl von unterschiedlichen austauschbaren Komponenten (107) zu unterteilen.

12. Hausgerät (100) gemäß einem der vorhergehenden Ansprüche, wobei
- das Hausgerät (100) eine Küchenmaschine mit einem Behälter (104) zur Aufnahme von Nahrungsmitteln ist; und
- die von dem Motor (102) angetriebene Komponente (107) ein in dem Behälter (104) angeordnetes und/oder einsetzbares Werkzeug zur Verarbeitung eines Nahrungsmittels ist.

13. Verfahren (300) zum Betrieb eines Hausgeräts (100), wobei das Verfahren (300) umfasst,
- Antreiben (301) einer Komponente (107) des Hausgeräts (100) mittels eines Motors (102) des Hausgeräts (100);
- Erfassen (302), mittels eines Gyroskops (110) des Hausgeräts (100), von Drehbewegungsdaten in Bezug auf eine Drehbewegung (211, 212, 213) des Gyroskops (110) und/oder des Hausgeräts (100); **dadurch gekennzeichnet, dass** das Verfahren (300) umfasst,
- Ermitteln, auf Basis der Drehbewegungsdaten, eines Wertes eines Streuungsmaßes (400) der Drehbewegung (211, 212, 213) des Gyroskops (110) und/oder des Hausgeräts (100) innerhalb eines Zeitintervalls; und
- Anpassen (303) eines Betriebs des Motors (102) zum Antrieb der Komponente (107) in Abhängigkeit von dem ermittelten Wert des Streuungsmaßes (400).

14. Verfahren (300) gemäß Anspruch 13, wobei
- ein Bewegungsmuster des Motors (102) in Abhängigkeit von den Drehbewegungsdaten angepasst wird;
- das Bewegungsmuster umfasst,
- ein oder mehrere Stopp-Zeitintervalle, in denen der Betrieb des Motors (102) unterbrochen wird; und
- ein oder mehrere Betriebs-Zeitintervalle, in denen der Motor (102) betrieben wird; und
- eine Dauer der ein oder mehrere Stopp-Zeitintervalle und/oder der ein oder mehreren Betriebs-Zeitintervalle, und/oder eine Geschwindigkeit des Motors (102) während der ein oder mehreren Betriebs-Zeitintervalle in Abhängigkeit von den Drehbewegungsdaten angepasst wird.

## Claims

1. Household appliance (100) which comprises
- a motor (102) which is configured to drive a component (107) of the household appliance (100);
- a gyroscope (110) which is configured to acquire rotary movement data with regard to a rotary movement (211, 212, 213) of the gyroscope (110) and/or of the household appliance (100); and
- a control unit (101 **characterized in that** the control unit (101) is configured
- so as on the basis of the rotary movement data to determine a value of a dispersion measure (400) of the rotary movement (211, 212, 213) of the gyroscope (110) and/or of the household appliance (100) within a time interval; and
- so as to operate the motor (102) in dependence upon the determined value of the dispersion measure (400).

2. Household appliance (100) according to claim 1, wherein the control unit (101) is configured so as to adapt a speed (402) of the motor (102) in dependence upon the determined value of the dispersion measure (400).

3. Household appliance (100) according to one of the preceding claims, wherein the control unit (101) is configured so as to determine repeatedly and/or periodically
- a respective current value of the dispersion measure (400) of the rotary movement (211, 212, 213) of the gyroscope (110) and/or of the household appliance (100); and
- to operate the motor (102) in dependence upon the respective current value of the dispersion measure (400).

4. Household appliance (100) according to one of the preceding claims, wherein
- the rotary movement data for the time interval indicates a sequence of rotary movement measurement values for a corresponding sequence of sampling points in time; and
- the control unit (101) is configured so as to determine the value of the dispersion measure (400) on the basis of the sequence of rotary movement measurement values.

5. Household appliance (100) according to claim 4, wherein the control unit (101) is configured so as in order to determine the value of the dispersion measure (400) for the time interval
- to determine an average value of the rotary movement measurement values of the sequence of rotary movement measurement values for the time interval; and
- to determine an average absolute and/or quadratic deviation of the sequence of rotary movement measurement values from the average value, in particular as a value of the dispersion measure (400).

6. Household appliance (100) according to one of the preceding claims, wherein the control unit (101) is configured so as automatically
- to increase a speed (402) of the motor (102) if the current value of the dispersion measure (400) is less than a preceding value of the dispersion measure (400); and/or
- to reduce the speed (402) of the motor (102) if the current value of the dispersion measure (400) is greater than the preceding value of the dispersion measure (400).

7. Household appliance (100) according to one of the preceding claims, wherein the rotary movement data indicates the rotary movement (211, 212, 213), in particular a rotation rate or a rotational speed or an angular velocity, of the gyroscope (110) and/or of the household appliance (100) in order to indicate one or multiple different rotation axes (201, 202, 203).

8. Household appliance (100) according to one of the preceding claims, wherein
- the rotary movement data indicates the rotary movement (211, 212, 213) of the gyroscope (110) and/or of the household appliance (100) about multiple different rotation axes (201, 202, 203), in particular about the longitudinal axis (201), about the transverse axis (202) and/or about the vertical axis (203) of the household appliance (100); and
- the control unit (101) is configured so as, on the basis of the rotary movement data, to evaluate the rotary movement (211, 212, 213) of the gyroscope (110) and/or of the household appliance (100) about the different rotation axes (201, 202, 203) in order to operate the motor (102) of the household appliance (100).

9. Household appliance (100) according to one of the preceding claims, wherein
- the household appliance (100) is designed so as to be operated with respectively one component (107) of a plurality of different interchangeable components (107) which are each driven by the motor (102); and
- the control unit (101) is configured
- so as, on the basis of the rotary movement data, to identify the component (107) of the plurality of different interchangeable components (107) with which the household appliance (100) is being operated; and
- to operate the motor (102) in dependence upon the determined component (107).

10. Household appliance (100) according to claim 9, wherein the control unit (101) is configured so as to adapt a rotational speed (402) and/or a movement pattern of the motor (102) in dependence upon the determined component (107).

11. Household appliance (100) according to one of claims 9 to 10, wherein the control unit (101) is configured
- so as, on the basis of the rotary movement data, to determine feature values for one or multiple features; wherein the one or multiple features describe the rotary movement (211, 212, 213) of the gyroscope (110) and/or of the household appliance (100) indicated by the rotary movement data; and
- using a machine-trained classifier and in dependence upon the determined feature values to identify for the one or multiple features the component (107) of the plurality of different interchangeable components (107) with which the household appliance (100) is being operated; wherein the classifier is configured so as to divide a multidimensional space of possible feature values for the one or multiple features into a plurality of part spaces for the corresponding features of different interchangeable components (107).

12. Household appliance (100) according to one of the preceding claims, wherein
- the household appliance (100) is a food processor having a container (104) for receiving foodstuffs; and
- the component (107) driven by the motor (102) is a tool which is arranged and/or can be inserted in the container (104) for processing a foodstuff.

13. Method (300) for operating a household appliance (100) wherein the method (300) comprises
- driving (301) a component (107) of the household appliance (100) by means of a motor (102) of the household appliance (100);
- acquiring (302) by means of a gyroscope (110) of the household appliance (100) rotary movement data with regard to a rotary movement (211, 212, 213) of the gyroscope (110) and/or of the household appliance (100) **characterized in that** the method (300) comprises
- determining on the basis of the rotary movement data a value of a dispersion measure (400) of the rotary movement (211, 212, 213) of the gyroscope (110) and/or of the household appliance (100) within a time interval; and
- adapting (303) an operation of the motor (102) so as to drive the component (107) in dependence upon the determined value of the dispersion measure (400).

14. Method (300) according to claim 13 wherein
- a movement pattern of the motor (102) is adapted in dependence upon the rotary movement data;
- the movement pattern comprises
- one or multiple stop time intervals in which the operation of the motor (102) is interrupted; and
- one or multiple operating time intervals in which the motor (102) is operated; and
- a duration of the one or multiple stop time intervals and/or of the one or multiple operating time intervals, and/or a speed of the motor (102) is adapted during the one or multiple operating time intervals in dependence upon the rotary movement data.

## Revendications

1. Appareil ménager (100), lequel comprend
- un moteur (102) configuré pour entraîner un composant (107) de l'appareil ménager (100) ;
- un gyroscope (110) configuré pour collecter des données de mouvement rotatif se rapportant à un mouvement rotatif (211, 212, 213) du gyroscope (110) et/ou de l'appareil ménager (100) ; et
- une unité de commande (101), **caractérisé en ce que** l'unité de commande (101) est configurée
- pour détecter, sur base des données de mouvement rotatif, une valeur de l'indicateur de dispersion (400) de mouvement rotatif (211, 212, 213) du gyroscope (110) et/ou de l'appareil ménager (100) à l'intérieur d'un intervalle de temps ; et
- pour faire fonctionner le moteur (102) en fonction de la valeur détectée de l'indicateur de dispersion (400).

2. Appareil ménager (100) selon la revendication 1, dans lequel l'unité de commande (101) est configurée pour adapter une vitesse (402) du moteur (102) en fonction de la valeur détectée de l'indicateur de dispersion (400).

3. Appareil ménager (100) selon l'une des revendications précédentes, dans lequel l'unité de commande (101) est configurée pour et ce, de manière récurrente et/ou périodique,
- détecter une valeur à chaque fois actuelle de l'indicateur de dispersion (400) du mouvement rotatif (211, 212, 213) du gyroscope (110) et/ou de l'appareil ménager (100) ; et
- faire fonctionner le moteur (102) en fonction de la valeur à chaque fois actuelle de l'indicateur de dispersion (400).

4. Appareil ménager (100) selon l'une des revendications précédentes, dans lequel
- les données de mouvement rotatif pour l'intervalle de temps indiquent une séquence de valeurs de mesure de mouvement rotatif pour une séquence correspondante de points temporels de sondage ; et
- l'unité de commande (101) est configurée pour détecter la valeur de l'indicateur de dispersion (400) sur base de la séquence des valeurs de mesure de mouvement rotatif.

5. Appareil ménager (100) selon la revendication 4, dans lequel l'unité de commande (101) est configurée, pour la détection de la valeur de l'indicateur de dispersion (400) pour l'intervalle de temps,
- pour détecter une valeur moyenne des valeurs de mesure de mouvement rotatif des valeurs de mesure de mouvement rotatif de la séquence de valeurs de mesure de mouvement rotatif pour cet intervalle de temps ; et
- pour détecter une déviation moyenne absolue et/ou quadratique de la séquence des valeurs de mesure de mouvement rotatif par rapport à la valeur moyenne, en particulier en tant que valeur de l'indicateur de dispersion (400).

6. Appareil ménager (100) selon l'une des revendications précédentes, dans lequel l'unité de commande (101) est configurée pour et ce, automatiquement
- augmenter la vitesse (402) du moteur (102) quand la valeur actuelle de l'indicateur de dispersion (400) est plus basse qu'une valeur précédente de l'indicateur de dispersion (400) ; et/ou
- pour réduire la vitesse (402) du moteur (102) quand la valeur actuelle de l'indicateur de dispersion (400) est plus élevée que la valeur précédente de l'indicateur de dispersion (400).

7. Appareil ménager (100) selon l'une des revendications précédentes, dans lequel les données de mouvement rotatif indiquent le mouvement rotatif (211, 212, 213), en particulier un taux de rotation ou une vitesse de rotation ou une vitesse angulaire du gyroscope (110) et/ou de l'appareil ménager (100) autour d'un ou de plusieurs axes de rotation (201, 202, 203) différents.

8. Appareil ménager (100) selon l'une des revendications précédentes, dans lequel
- les données de mouvement rotatif indiquent le mouvement rotatif (211, 212, 213) du gyroscope (110) et/ou de l'appareil ménager (100) autour de plusieurs axes de rotation différents (201, 202, 203), en particulier autour d'un axe longitudinal (201), autour d'un axe transversal (202) et/ou autour d'un axe vertical (203) de l'appareil ménager (100) ; et
- l'unité de commande (101) est configurée pour analyser, sur base des données de mouvement rotatif, le mouvement rotatif (211, 212, 213) du gyroscope (110) et/ou de l'appareil ménager (100) autour des différents axes de rotation (201, 202, 203), pour faire fonctionner le moteur (102) de l'appareil ménager (100).

9. Appareil ménager (100) selon l'une des revendications précédentes, dans lequel
- l'appareil ménager (100) est configuré pour fonctionner avec à chaque fois un composant (107) parmi une pluralité de composants (107) différents interchangeables, lesquels sont à chaque fois entraînés par le moteur (102) ; et
- l'unité de commande (101) est configurée pour
- déterminer, sur base des données de mouvement rotatif, le composant (107) parmi la pluralité de différents composants (107) interchangeables, avec lequel l'appareil ménager (100) fonctionne ; et pour
- faire fonctionner le moteur (102) en fonction du composant (107) détecté.

10. Appareil ménager (100) selon la revendication 9, dans lequel l'unité de commande (101) est configurée pour adapter une vitesse de rotation (402) et/ou un schéma de mouvements du moteur (102) en fonction du composant détecté (107).

11. Appareil ménager (100) selon l'une des revendications 9 à 10, dans lequel l'unité de commande (101) est configurée pour
- détecter, sur base des données de mouvement rotatif, des valeurs caractéristiques pour une ou plusieurs caractéristiques ; la une ou plusieurs caractéristiques décrivant le mouvement rotatif (211, 212, 213) indiqué par les données de mouvement rotatif, du gyroscope (110) et/ou de l'appareil ménager (100) ; et
- déterminer, à l'aide d'un classificateur par instructions machine et en fonction des valeurs caractéristiques détectées pour la une ou plusieurs caractéristiques, le composant (107) parmi la pluralité de composants (107) différents interchangeables, avec lequel l'appareil ménager (100) fonctionne; le classificateur étant configuré pour sectionner un espace pluridimensionnel de valeurs caractéristiques possibles pour la une ou plusieurs caractéristiques dans une pluralité de parties d'espace pour la pluralité correspondante de composants (107) différents interchangeables.

12. Appareil ménager (100) selon l'une des revendications précédentes, dans lequel
- l'appareil ménager (100) est une machine de cuisine avec un récipient (104) recevant des aliments ; et
- le composant (107) entraîné par le moteur (102) est un ustensile se trouvant et/ou à insérer dans le récipient (104) destiné au traitement d'un aliment.

13. Procédé (300) de fonctionnement d'un appareil ménager (100), dans lequel le procédé (300) comprend
- l'entraînement (301) d'un composant (107) de l'appareil ménager (100) au moyen d'un moteur (102) de l'appareil ménager (100) ;
- la collecte (302), au moyen d'un gyroscope (110) de l'appareil ménager (100), de données de mouvement rotatif se rapportant à un mouvement rotatif (211, 212, 213) du gyroscope (110) et/ou de l'appareil ménager (100) ; **caractérisé en ce que** le procédé (300) comprend
- la détection, sur base des données de mouvement rotatif, d'une valeur de l'indicateur de dispersion (400) du mouvement rotatif (211, 212, 213) du gyroscope (110) et/ou de l'appareil ménager (100) à l'intérieur d'un intervalle de temps ; et
- l'adaptation (303) d'un fonctionnement du moteur (102) pour le fonctionnement du composant (107) en fonction de la valeur détectée de l'indicateur de dispersion (400).

14. Procédé (300) selon la revendication 13, dans lequel
- un schéma de mouvements du moteur (102) est adapté en fonction des données de mouvement rotatif ;
- le schéma de mouvement comprend
- un ou plusieurs intervalles de temps d'arrêt, dans lesquels le fonctionnement du moteur (102) est interrompu ; et
- un ou plusieurs intervalles de temps de fonctionnement, dans lesquels le moteur (102) fonctionne ; et
- une durée du un ou plusieurs intervalles de temps d'arrêt et/ou du un ou plusieurs intervalles de temps de fonctionnement, et/ou une vitesse du moteur (102) pendant laquelle le un ou plusieurs intervalles de temps de fonctionnement est adapté en fonction des données de mouvement rotatif.
